Europäisches Patentamt

European Patent Office

Office européen des brevets

(19)

(11) Numéro de publication : **0 020 248**
**B1**

(12)

# FASCICULE DE BREVET EUROPÉEN

(45) Date de publication du fascicule du brevet :
29.02.84

(51) Int. Cl.³ : **B 29 D 3/02**, B 29 D 23/00

(21) Numéro de dépôt : 80400718.5

(22) Date de dépôt : 22.05.80

(54) Dispositif pour le moulage de pièces cylindriques.

(30) Priorité : 25.05.79 FR 7913314

(43) Date de publication de la demande :
10.12.80 Bulletin 80/25

(45) Mention de la délivrance du brevet :
29.02.84 Bulletin 84/09

(84) Etats contractants désignés :
BE DE GB IT NL SE

(56) Documents cités :
CH-A- 398 056
DE-A- 2 232 727
FR-A- 737 944
FR-A- 1 297 312
FR-A- 1 569 870
FR-A- 2 358 257
GB-A- 1 453 936
US-A- 3 177 105

(73) Titulaire : **Société Nationale Industrielle Aérospatiale
Société anonyme dite:
37 Bld de Montmorency
F-75016 Paris (FR)**

(72) Inventeur : **Larribe, André
12, rue du Pasteur Martin Luther King
F-78230 Le Pecq (FR)**

(74) Mandataire : **Bonnetat, Christian
Cabinet PROPI Conseils 23 rue de Léningrad
F-75008 Paris (FR)**

Dispositif pour le moulage de pièces cylindriques

La présente invention concerne le moulage de pièces cylindriques. Par « pièce cylindrique », on entend ci-après toute pièce dont la surface extérieure est formée de génératrices parallèles, quelle que soit la forme de sa section qui, bien entendu, peut être circulaire, mais peut également être ovale, polygonale, etc...

On sait que la réalisation de pièces cylindriques par moulage soulève des difficultés, puisque leur forme les rend pratiquement indémoulables. Pour réaliser de telles pièces, on utilise généralement des moules en au moins deux parties assemblables selon un plan de joint passant par l'axe desdites pièces. Outre le fait que de tels moules sont coûteux, leur mise en œuvre au démoulage nécessite généralement l'arrachage d'une des parties du moule par rapport à l'autre, ce qui est préjudiciable à la durée de vie des surfaces du plan de joint et des organes de positionnement relatif desdites parties.

Si l'on veut, pour éviter ces inconvénients, utiliser des moules monoblocs moins coûteux et d'usage plus long que les moules en plusieurs parties, on doit donner de la dépouille auxdites pièces, c'est-à-dire les rendre légèrement coniques. Une telle déformation n'est pas toujours possible, lorsque lesdites pièces doivent être absolument cylindriques. On peut aussi, conformément au brevet DE-A-2 232 727 prévoir un moule obtenu par roulage d'une feuille de métal à la forme d'un cylindre fendu. Un tel tube présente par nature un certain nombre de défauts, à savoir une section non exactement circulaire, une section non constante le long du moule, un diamètre non précis et un mauvais état de surface. En effet, même si la feuille est formée par roulage sur un mandrin parfaitement circulaire, il va de soi que lorsque les bords de la fente sont pressés l'un vers l'autre au moulage, la section du moule ne peut plus être circulaire. Ainsi, les moules conformes au brevet DE-A-2 232 727 ne peuvent permettre l'obtention de pièces parfaitement cylindriques, présentant un état de surface de haute finition, directement de moulage.

On remarquera par ailleurs que les moules du brevet DE-A-2 232 727, pour prendre une forme approximativement circulaire, nécessitent la disposition de disques transversaux intérieurs contre lesquels le tube est pressé pendant le moulage. De tels « gabarits » intérieurs, s'ils donnent la forme au moule, empêchent le moulage de pièces allongées. Inversement, si on supprime lesdits gabarits, la section n'est plus circulaire. Dans ces moules, le tube occupe une position sans contrainte pendant le moulage et ce n'est qu'au moment du démoulage que l'on exerce une action extérieure sur lui pour écarter sa fente. Il va de soi que chaque opération de démoulage déforme le tube un peu plus, de sorte que les gabarits paraissent indispensables.

La présente invention a pour objet de remédier à ces inconvénients. Elle concerne un dispositif de moulage monobloc, peu coûteux permettant le moulage et le démoulage aisés de pièces parfaitement cylindriques. De plus, ce dispositif selon l'invention communique aux pièces cylindriques moulées, directement de moulage, un état de surface de haute finition.

A cette fin, selon l'invention, le dispositif pour le moulage de pièces tubulaires constituées d'un stratifié de fibres imprégnées de résine polymérisable, comportant, d'une part, un moule tubulaire présentant une élasticité propre et pourvu d'une fente longitudinale, moule dont la paroi intérieure est destinée à définir la paroi extérieure desdites pièces tubulaires et qui est associé à des organes de maintien susceptibles, lorsqu'ils coopèrent avec ledit tube, de maintenir la cavité intérieure de celui-ci dans une position à section restreinte correspondant à celle des pièces à mouler et, lorsqu'ils ne coopèrent pas avec ledit tube, à permettre à ladite cavité intérieure de prendre une position à section agrandie, et, d'autre part, un noyau intérieur expansible, servant à définir la paroi intérieure desdites pièces tubulaires, est caractérisé en ce que la paroi intérieure dudit moule est traitée de façon mécanique avant réalisation de ladite fente afin d'y créer des contraintes susceptibles de permettre audit moule de se dilater transversalement de façon spontanée, lorsqu'il est fendu, pour le faire passer spontanément de la position à section restreinte à la position à section agrandie.

Ainsi, pendant le moulage, lesdits organes de maintien permettent au tube de constituer le moule, tandis que, pour démouler une pièce cylindrique qui vient d'être moulée, il suffit d'éliminer l'action desdits organes de maintien, de sorte que ledit tube se dilate et que ladite pièce peut facilement être sortie du tube. Tout se passe comme si le moule monobloc selon l'invention était constitué de deux coquilles hémicylindriques articulées le long d'une génératrice diamétralement opposée à la fente longitudinale du tube, pour pouvoir pivoter l'une par rapport à l'autre de façon limitée, le passage de la position restreinte à la position agrandie s'effectuant sous l'action de l'élasticité propre du tube, tandis que le passage de la position agrandie à la position restreinte s'effectue à l'encontre de cette action élastique.

On remarquera que le brevet GB-A-1 453 936 décrit un dispositif de moulage comportant un mandrin à dimensions transversales fixes, non expansible et non rétractable, et un moule fendu en une matière présentant une élasticité naturelle. Pour utiliser un tel dispositif de moulage, on enroule une matière fibreuse sur le mandrin rigide et on introduit celui-ci, ainsi revêtu de la matière fibreuse à l'intérieur du moule fendu.

Du fait que le tube est fendu et élastique, il se prête à une légère dilatation provoquée par l'introduction du mandrin à dimensions transversales fixes, afin de faciliter celle-ci qui serait autrement difficile à cause de la structure transversalement rigide du mandrin. Lorsque le mandrin est mis en place dans le moule, cette dilatation provoquée subsiste au moins partiellement (de sorte que la pièce moulée ne peut certainement pas être parfaitement cylindrique) et le moule presse élastiquement la matière fibreuse contre le mandrin, afin de pouvoir remplir son office. La fente du moule reste ouverte et on l'obture au moyen d'une bande, avant l'opération de moulage.

Ainsi, dans ce document GB-A-1 453 936, l'élasticité naturelle du moule élastique fendu est utilisée pour une tendance spontanée à la contraction vers la position de moulage et, lors de l'introduction du mandrin rigide, on le dilate transversalement à l'encontre de l'action de cette élasticité naturelle.

Ce processus est totalement inverse de celui de la présente invention, dans lequel le moule présente une tendance spontanée à la dilatation à partir de la position de moulage. Dans l'invention, il n'y a aucun besoin de provoquer une dilatation à l'introduction du mandrin, car celui-ci est expansible.

Dans le dispositif selon l'invention, le tube transversalement expansible peut être en acier et être traité intérieurement, par exemple par galetage, afin d'y créer une contrainte susceptible de permettre audit tube de se dilater transversalement lorsqu'il est fendu. Un tel traitement mécanique présente l'avantage de conférer à l'intérieur du tube, qui constituera la cavité de moulage, un excellent état de surface et une grande résistance à l'usure par frottement. Ainsi, le moule obtenu est solide et confère aux pièces moulées un bon fini.

Par exemple, dans le cas de tubes d'acier de la qualité des cylindres de vérins hydrauliques, ayant un diamètre intérieur nominal de 60 mm, on peut obtenir, par galetage, une augmentation spontanée de 0,5 à 1 mm de ce diamètre intérieur, dès que le tube est fendu. La largeur de la fente peut être faible, par exemple de l'ordre du demi-millimètre.

Dans ces conditions, il suffit de prévoir des moyens de serrage combinés avec les organes de maintien ou indépendants de ceux-ci, tels que brides ou colliers, permettant le passage du tube de sa position à section agrandie à sa position à section restreinte et inversement, pour que le tube prenne sa forme de moulage ou celle de démoulage. Les opérations de serrage et de desserrage du tube étant effectuées bien en deçà de la limite élastique, elles peuvent être renouvelées de très nombreuses fois sans détérioration du tube.

Le noyau intérieur expansible peut comporter une vessie gonflable reliée à l'extérieur du tube fendu à une source de fluide sous pression. Ladite vessie gonflable peut être montée sur un tube rigide lui servant de support, l'intérieur dudit tube étant en communication, d'une part, avec ladite source de fluide sous pression et, d'autre part, par l'intermédiaire de trous traversants, avec la face interne de ladite vessie.

Les figures du dessin annexé feront bien comprendre comment l'invention peut être réalisée.

La figure 1 est une vue, partiellement en coupe longitudinale, d'un dispositif de moulage selon l'invention, destiné à la réalisation de corps de bielle tubulaire.

La figure 2 est une vue en coupe transversale selon la ligne II-II de la figure 1.

La figure 3 est une vue extérieure du tube fendu du dispositif des figures 1 et 2.

La figure 4 est une vue en coupe longitudinale du noyau intérieur du dispositif de la figure 1.

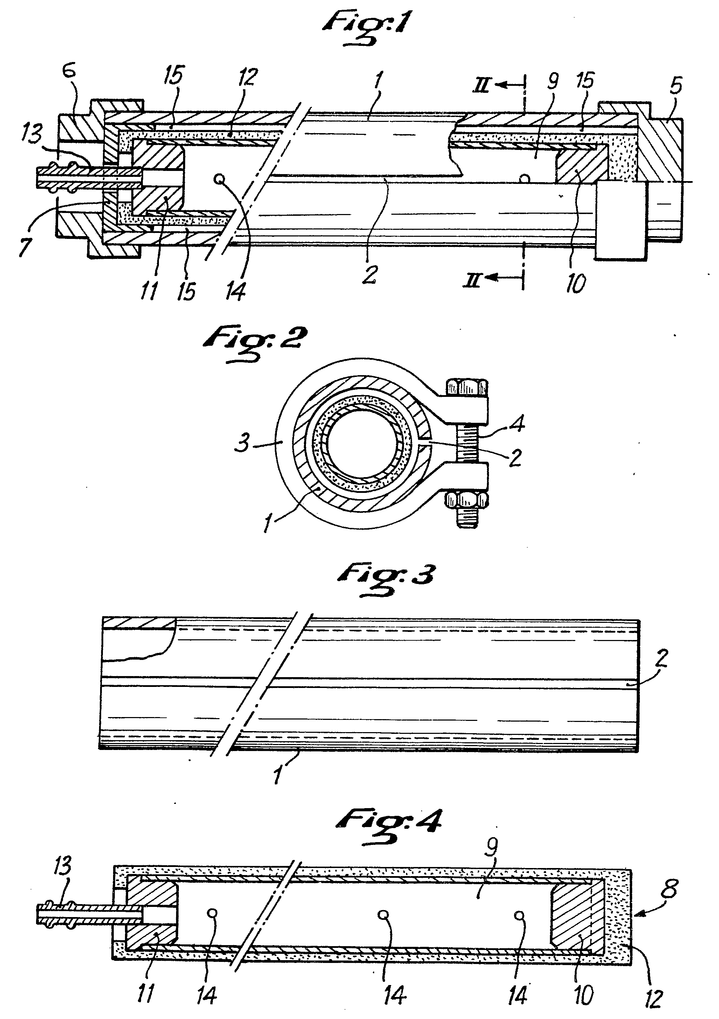

Le dispositif de moulage selon l'invention, montré par les figures 1 et 2, est destiné à la réalisation de corps de bielles tubulaires en stratifié tissu-résine polymérisable. Il comporte un tube d'acier 1, ayant subi un galetage intérieur et comportant une fente longitudinale 2. Du fait du galetage intérieur, le tube 1 est soumis à une contrainte mécanique tendant à le faire se dilater élastiquement, de façon limitée.

La dilatation radiale du tube 1 est contrôlée par au moins un collier élastique de serrage 3, entourant ledit tube et pourvu d'une vis de réglage 4 (voir la figure 2).

Grâce au collier de serrage 3, il est possible d'amener le tube 1 à son diamètre nominal et alors de le fermer par deux embouts d'extrémité 5 et 6, solidarisés dudit tube par la force d'expansion de celui-ci.

A l'intérieur du tube 1 peut être maintenu, par une entretoise 7, un noyau coaxial expansible 8.

Ce noyau 8 comporte un tube rigide 9, obturé à ses extrémités par des bouchons 10 et 11 et supportant une vessie gonflable 12. L'intérieur du tube rigide 9 peut être relié à une source de fluide sous pression (non représentée) par l'intermédiaire d'un connecteur 13 solidaire du bouchon 11 et traversant l'embout 6. Par ailleurs, l'intérieur du tube rigide 9 est en communication avec la paroi interne de la vessie 12 par l'intermédiaire de trous traversants 14.

Pour effectuer un corps tubulaire en stratifié tissu-résine, on opère de la façon suivante.

Sur le noyau 8 de la figure 4, supposé sorti du tube 1, on enroule le stratifié souple (non représenté). Ensuite, le noyau 8 et l'enroulement de stratifié qu'il porte sont mis en place dans le tube 1 qui se trouve en position dilatée, du fait que le ou les colliers 3 sont desserrés. Lors de cette mise en place, on dispose l'entretoise 7 et le stratifié prend la place de l'espace 15 prévu entre le noyau 3 et le tube 1. Le ou les colliers 3 sont alors serrés jusqu'à amener le tube 1 à sa position nominale rétreinte. On peut donc le fermer par les embouts 5 et 6 qui sont maintenus solidarisés du fait qu'on desserre un peu les colliers 3 de sorte que la pression radiale d'expansion des extrémités du tube 1 s'exerce sur lesdits embouts.

Le dispositif de moulage de la figure 1 est introduit dans un four par exemple à 120° pendant une heure et demie et le connecteur 13 est relié à une source d'air comprimé. Ainsi, l'enroulement de stratifié est plaqué contre l'intérieur du tube 1 par la vessie 12 qui se dilate sous l'action de l'air sous pression et la résine imprégnant le stratifié se polymérise.

La résine excédentaire est chassée par la fente 2 du tube 1. Après polymérisation de la résine, le dispositif est déconnecté de la source d'air comprimé et retiré du four.

Après une période de refroidissement, par exemple de 30 minutes à température ambiante, les embouts 5 et 6 sont démontés, ainsi que les colliers 3 qui maintenaient le tube 1 à son diamètre nominal. Sous l'action de ses contraintes internes, le tube 1 augmente légèrement de diamètre et se décolle automatiquement de la pièce moulée.

La vessie dégonflée 12 revient à son diamètre normal et le noyau 8 portant la pièce moulée est retiré du tube 1. La pièce moulée est ensuite extraite du noyau précédent par coulissement.

Un léger ponçage est alors effectué sur la pièce afin de supprimer les écoulements de résine produits pendant la polymérisation dans la fente 2.

L'absence de matrice à l'extérieur de la pièce moulée au moment du démoulage de celle-ci par rapport à la vessie facilite grandement la récupération de ladite vessie, la pièce moulée ne subissant aucune contrainte extérieure.

L'invention permet notamment de réaliser des corps de bielles structurales pour aéronefs gros porteurs, avec une précision d'exécution et un fini remarquables. De plus, l'outillage selon l'invention est peu coûteux et très robuste. Il permet d'obtenir des tubes de différentes épaisseurs pour un diamètre extérieur constant.

## Revendications

1. Dispositif pour le moulage de pièces tubulaires constituées d'un stratifié de fibres imprégnées de résine polymérisable, comportant, d'une part, un moule tubulaire (1) présentant une élasticité propre et pourvu d'une fente longitudinale (2), moule dont la paroi intérieure est destinée à définir la paroi extérieure desdites pièces tubulaires et qui est associé à des organes de maintien (5, 6) susceptibles, lorsqu'ils coopèrent avec ledit tube, de maintenir la cavité intérieure de celui-ci dans une position à section restreinte correspondant à celle des pièces à mouler, et, lorsqu'ils ne coopèrent pas avec ledit tube, à permettre à ladite cavité intérieure de prendre une position à section agrandie, et, d'autre part, un noyau intérieur expansible (8), servant à définir la paroi intérieure desdites pièces tubulaires, caractérisé en ce que la paroi intérieure dudit moule (1) est traitée de façon mécanique avant réalisation de ladite fente (2) afin d'y créer des contraintes susceptibles de permettre audit moule de se dilater transversalement de façon spontanée, lorsqu'il est fendu, pour le faire passer spontanément de la position à section restreinte à la position à section agrandie.

2. Dispositif selon la revendication 1, caractérisé en ce que le tube expansible est en acier et est traité intérieurement par galetage.

3. Dispositif selon l'une des revendications 1 ou 2, caractérisé en ce qu'il comporte des moyens de serrage (3, 4) combinés avec les organes de maintien (5, 6) ou indépendants de ceux-ci, permettant le passage du tube (1) de sa position à section agrandie à sa position à section restreinte et inversement.

4. Dispositif selon la revendication 1, caractérisé en ce que ledit noyau intérieur expansible (8) comporte une vessie gonflable (12) reliée à une source de fluide sous pression.

5. Dispositif selon la revendication 4, caractérisé en ce que la vessie gonflable (12) est montée sur un tube rigide (9) lui servant de support, l'intérieur dudit tube rigide étant en communication, d'une part, avec la source de fluide sous pression, et, d'autre part, par l'intermédiaire de trous traversants (14), avec la face intérieure de la vessie (12).

6. Dispositif selon l'une des revendications 1 à 5, caractérisé en ce que lesdits organes de maintien (5, 6) sont constitués par des embouts amovibles aptes à emprisonner les extrémités du tube 1 transversalement expansible.

7. Dispositif selon l'une des revendications 1 à 6, caractérisé en ce que lesdits moyens de serrage (3, 4) sont formés par au moins un collier de diamètre réglable (3) entourant ledit tube (1) transversalement expansible.

## Claims

1. Device for moulding tubular pieces constituted by a laminate of fibers impregnated with polymerisable resin, comprising, on the one hand, a tubular mould (1) having an inherent elasticity and provided with a longitudinal split (2), of which the inner wall is designed for determining the outer wall of said tubular pieces and which is associated with holding members (5, 6) capable, when they cooperate with said tube, of holding the internal cavity thereof in a position with reduced section corresponding to that of said pieces to be moulded and, when they do not cooperate with said tube, of allowing said internal cavity to take a position with expanded section, and, on the other hand, an internal expansible core (8), serving for determining the inner wall of said tubular pieces, characterized in that the inner wall of said mould (1) is treated mechanically before cutting said split (2) in order to create therein stresses capable of allowing said mould to expand transversely spontaneously when it is split, in order it is able to pass spontaneously from said position with reduced section to said position with expanded section.

2. Device according to claim 1, characterized in that the expansible tube is made of steel and the interior thereof is treated by roll-over.

3. Device according to one of claims 1 or 2, characterized in that it comprises tightening means (3, 4) combined with the holding members (5, 6) or independent thereof, allowing said tube (1) to pass from said position with expanded section to said position with reduced section and vice-versa.

4. Device according to claim 1, characterized in that said internal expansible core (8) comprises an inflatable bag (12) connected to a source of pressurised fluid.

5. Device according to claim 4, characterized in that the inflatable bag (12) is mounted on a rigid tube (9) serving as support therefor, the interior of said rigid tube being in communication, on the one hand, with the source of pressurised fluid, and, on the other hand, via through holes (14), with the inner face of the bag (12).

6. Device according to one of claims 1 to 5, characterized in that said holding members (5, 6) are constituted by removable end pieces adapted to imprison the ends of the transversely expansible tube (1).

7. Device according to one of claims 1 to 6, characterized in that said tightening means (3, 4) are formed by at least one clamp (3) of adjustable diameter surrounding said transversely expansible tube (1).

**Ansprüche**

1. Vorrichtung zum Formen von röhrenförmigen Teilen bestehend aus einem Faserlaminat, das mit polymerisierbarem Harz imprägniert ist und einerseits eine Röhrenform (1) mit einer Eigenelastizität sowie einem Längsschlitz (2) aufweist, wobei die Innenwand der Form dazu bestimmt ist, die Aussenwand der Röhrenteile zu begrenzen, und die den Halteorganen (5, 6) zugeordnet ist, die bei Zusammenwirken mit dem Rohr deren Innenhohlraum in einer Stellung mit vermindertem Querschnitt halten kann, der dem der zu formenden Teile entspricht, und die bei Nichtzusammenwirken mit dem Rohr den Innenhohlraum eine Stellung mit vergrößertem Querschnitt einnehmen lassen kann, und andererseits einen dehnbaren Innenkern (8) besitzt, der zur Begrenzung der Innenwand der Röhrenteile dient, dadurch gekennzeichnet, daß die Innenwand der Form (1) vor der Ausbildung des Schlitzes (2) derart mechanisch behandelt ist, daß man dort Belastungen erzeugt, durch die die Form dazu veranlasst werden kann, sich spontan transversal auszuweiten, wenn sie geschlitzt wird, um sie spontan von der Position mit vermindertem Querschnitt in die Position mit vergrößertem Querschnitt übergehen zu lassen.

2. Vorrichtung nach Anspruch 1, dadurch gekennzeichnet, daß die dehnbare Röhre aus Stahl gefertigt ist und im Innern einer Glattwalzbehandlung unterzogen wurde.

3. Vorrichtung nach einem der Ansprüche 1 oder 2, dadurch gekennzeichnet, daß sie Einspannmittel (3, 4) aufweist, die mit den Halteorganen (5, 6) kombiniert oder von diesen unabhängig sind und durch die es ermöglicht wird, daß die Röhre (1) von ihrer Stellung mit vergrößertem Querschnitt in ihre Stellung mitvermindertem Querschnitt übergehen kann und umgekehrt.

4. Vorrichtung nach Anspruch 1, dadurch gekennzeichnet, daß der dehnbare Innenkern (8) eine aufblasbare Blase (12) aufweist, die mit einer Druckmittelquelle verbunden ist.

5. Vorrichtung nach Anspruch 4, dadurch gekennzeichnet, daß die aufblasbare Blase (12) auf einer starren, ihr als Halt dienenden Röhre (9) montiert ist, wobei das Innere der starren Röhre einerseits mit der Druckmittelquelle und andererseits über durchsetzende Löcher (14) mit der Innenfläche der Blase (12) in Verbindung steht.

6. Vorrichtung nach einem der Ansprüche 1 bis 5, dadurch gekennzeichnet, daß die Halteorgane (5, 6) gebildet sind aus lösbaren Ansatzstücken, die zweckmäßig so ausgebildet sind, daß sie die Enden der transversal dehnbaren Röhre gefangenhalten können.

7. Vorrichtung nach einem der Ansprüche 1 bis 6, dadurch gekennzeichnet, daß die Einspannmittel (3, 4) gebildet sind aus zumindest einem Ring mit einstellbarem Durchmesser (3), der die transversal dehnbare Röhre (1) umgibt.

## Fig:1

## Fig:2

## Fig:3

## Fig:4